## Europäisches Patentamt
## European Patent Office
## Office européen des brevets

(19)

(11) Veröffentlichungsnummer: **0 228 073**
**A2**

(12) **EUROPÄISCHE PATENTANMELDUNG**

(21) Anmeldenummer: **86117951.3**

(22) Anmeldetag: **23.12.86**

(51) Int. Cl.4: **B01D 23/20**

(30) Priorität: **27.12.85 CS 9912/85**

(43) Veröffentlichungstag der Anmeldung:
**08.07.87 Patentblatt 87/28**

(84) Benannte Vertragsstaaten:
**BE DE FR GB LU NL**

(71) Anmelder: **SIGMA koncern**
**Trida Kosmonautu 6**
**Olomouc(CS)**

(72) Erfinder: **Spaan, Albert Hendrik, Dipl.-Ing.**
**Ds. J. Borstlusstraat 10**
**Zaandijk(NL)**
Erfinder: **Hofman, Hans, Dipl.-Ing.**
**Stadhouderslaan 83**
**Schiedam(NL)**
Erfinder: **Muzik, Miroslav, JUDr.**
**ul.9 Kvetna 35**
**Prerov(CS)**
Erfinder: **Rozkydalek, Jiri, Doz. Ing. CSc.**
**Ulrychova 30**
**Brno(CS)**
Erfinder: **Kalous, Jaroslav, Dipl.-Ing.**
**Schodova 16**
**Brno(CS)**

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) **Schwimmerarmatur zum Dosieren von Flüssigkeiten.**

(57) Durch die Erfindung soll die Betriebszuverlässigkeit einer z. B. in der Schmutzwasseraufbereitung eingesetzten Armatur verbessert werden. Die Armatur besteht aus einem Verschlußkörper (10) für eine Auslaßöffnung (7), welcher an einem mit einem Schwimmer (16) versehenen Schwenkhebel (14) aufgehängt ist. Der Hebel (14) ist mit einem frei verschiebbaren Gewicht (19) versehen, das vorteilhaft an einer Rolle (18) hängt oder durch Quecksilber oder eine Kugel gebildet wird. Der Hebel (14) kann mindestens einen aufgebogenen Abschnitt haben und/oder mit einem Dämpfer (20), mit einem Gefäß - (21) mit mindestens einer Öffnung (22) im Unterteil oder mit einem Kolben (23) gekuppelt sein, der in einem unterhalb des Hebels (14) untergebrachten beiderseitig offenen Zylinder (24) gelagert ist. Im Verschlußkörper (10) kann ein Belüftungskanal (25) für die Auslaßöffnung (7) angeordnet sein.

1a

## Schwimmerarmatur zum Dosieren von Flüssigkeiten

Die Erfindung betrifft eine Schwimmerarmatur zum Dosieren von Flüssigkeiten, insbesondere zur selbsttätigen Steuerung des Waschvorganges einer Filterschicht in einer Kläranlage.

Aus der FR-PS 2 115 942 ist eine Schwimmerarmatur bekannt, welche für die Auslaßöffnung eines Vorratsbehälters, z. B. eines Sammelbehälters für Abfallflüssigkeiten, bestimmt ist. Die Auslaßöffnung mit waagerechter Durchflußachse wird verschlossen, sobald der Pegel einen vorbestimmten Minimalwert erreicht. Eine Hebelschwimmereinrichtung trägt einen Verschlußschwimmkörper und trennt den Schwimmkörper von der Auslaßöffnung, sobald der Pegel im Vorratsbehälter eine vorbestimmte Maximalhöhe erreicht.

Ein Nachteil dieser Schwimmerarmatur liegt darin, daß der Schwimmkörper nur mit Hilfe einer Unterdruckquelle die Auslaßöffnung vollkommen - schließt, ohne die sonst Undichtigkeiten entstehen, die Verluste der Füllung des Vorratsbehälters und ein Absinken des Flüssigkeitsstandes unter das vorbestimmte Minimalniveau verursachen. Zufällige Unterdruckschwankungen an der Auslaßöffnung beeinflussen den Sitz des Schwimmkörpers auf der Auslaßöffnung und dadurch auch den Pegel, bei welchem die Auslaßöffnung geöffnet wird, was bei Anwendung dieser Armatur zur selbsttätigen Steuerung eines Waschvorganges einer Filterschicht unerwünscht ist. Die Dichtigkeit und der Öffnungszeitpunkt dieser Armatur sind also in hohem Maß vom Unterdruckniveau an der Auslaßöffnung abhängig. Weitere Nachteile dieser Lösung liegen im übermäßigen Verschleiß der Dichtungsflächen und darin, daß die Armatur für den Einsatz eines nicht schwimmenden Verschlußkörpers ungeeignet ist.

Aufgabe der Erfindung ist es, eine Schwimmerarmatur zum selbsttätigen gezielten Öffnen und Schließen einer Auslaßöffnung eines Flüssigkeitsbehälters zu schaffen, die auch bei ungünstigen Betriebsbedingungen wartungsfrei und über längere Betriebszeiten voll funktionsfähig ist und die Auslaßöffnung ohne äußere Einwirkung zuverlässig und leckagefrei verschließt bzw. öffnet.

Diese Aufgabe wird erfindungsgemäß dadurch gelöst, daß die Schwimmerarmatur zum Flüssigkeitsdosieren, besonders zur selbsttätigen Steuerung des Waschvorganges der Filterschicht, aus einem Verschlußkörper für die Auslaßöffnung besteht, welcher an einem mit einem Schwimmer versehenen Schwenkhebel aufgehängt ist, wobei der schwenkbare Hebel längs mindestens einem Teil seiner Länge mit einem frei verschiebbaren Gewicht versehen ist.

Vorteilhaft kann das Gewicht an einer am Hebel gelagerten Rolle aufgehängt sein oder aus im hohlen Hebel eingeschlossenem Quecksilber oder einer Kugel bestehen.

Zweckmäßig kann der Hebel mit dem Ende des Teiles seiner Länge mit dem gelagerten Gewicht aufgebogen oder in geraden Abschnitten gebogen sein.

Zur Dämpfung der Schießbewegung und von Stoßbeanspruchungen beim Aufsetzen auf die Auslaßöffnung kann der Hebel mit einem Dämpfer und/oder mit einem Gefäß mit mindestens einer Öffnung im Unterteil und/oder mit einem Kolben gekuppelt sein, der in einem beidseitig offenen Zylinder unter dem Hebel frei verschiebbar ist.

Ferner kann im hohlzylindrischen Verschlußkörper ein in die Auslaßöffnung mündender Belüftungskanal angeordnet sein.

Der besondere Effekt der Erfindung liegt in der besseren Dichtwirkung, in der wesentlichen Verschleißminderung der Dichtungsflächen, in der Anwendungsmöglichkeit mit einem nicht - schwimmenden Verschlußkörper und in der Bereichsbegrenzung der Höhe des Maximalniveaus bei der Armaturöffnung durch die wesentliche bzw. vollständige Beseitigung des Unterdruckeinflusses in der Auslaßöffnung.

Ein Ausführungsbeispiel der erfindungsgemäßen Schwimmerarmatur mit verschiedenen Variationen wird im folgenden anhand der - schematischen Zeichnung ausführlich beschrieben.

Die Filtereinrichtung besteht aus einem offenen Behälter 1, in dem eine versenkte Wand 2 untergebracht ist, welche über dem Behälterboden endet und den Behälter 1 in zwei Teile teilt. In den rechten Teil ragt in Nähe des Behälterbodens ein Zuflußrohr 3 für Schmutzwasser hinein, das obere Löcher aufweist. Über diesem Rohr 3 ist eine durchlässige Zwischenwand 4 der versenkten Wand 2 horizontal angeordnet sowie an den Wänden des rechten Teils des Behälters 1 befestigt. Oberhalb dieser Zwischenwand ist eine Überlaufrinne 5 für das gereinigte Wasser im rechten Behälterteil angeordnet. Die Lage der Überlaufrinne 5 oberhalb der Zwischenwand 4 bestimmt den nutzbaren Rauminhalt für das gereinigte Wasser, das zum Waschen einer - schwimmenden körnigen Filterschicht 6 verwendet wird, die sich unter der Zwischenwand 4 befindet.

Im linken Teil des Behälters 1 ist eine Auslaßöffnung 7 für das Waschwasser mit vertikaler Durchflußachse am inneren Ende eines Rohrkrümmers vorgesehen, die am Umfang einen Dichtungssitz 8 trägt, auf welchem über einen Dichtungsflansch 9 mit einer Packung ein hohlzylindrischer Verschlußkörper 10 abgestützt ist. Der Verschlußkörper 10 weist oberhalb der Überlaufrinne 5 eine Aufhängeöse 11 auf, in deren Öffnung 12 vertikal frei verschiebbar eine Querwand 13 gelagert ist, die am linken Arm eines Hebels 14 befestigt ist. Dieser Hebel 14 ist an einem am Oberteil der versenkten Wand 2 befestigten Bolzen 15 schwenkbar gelagert. Am linken Arm des Hebels 14 ist ein Doppelschwimmer 16 zu beiden Seiten des Verschlußkörpers 10 angeordnet. Der rechte Arm des Hebels 14 trägt einen Anschlag 17. Ein Gewicht 19 hängt an einer Rolle 19, die auf dem rechten Arm des Hebels 14 zwischen dem Bolzen 15 und dem Anschlag 17 laufen kann. Der rechte Arm des Hebels 14 hat einen schräg nach oben abgebogenen Teil, dessen Länge größer als die halbe Armlänge ist. Der Querschnitt des hohlzylindrischen Teils des Verschlußkörpers 10 ist kleiner als der Durchflußquerschnitt des Dichtungssitzes 8.

Im Stillstand ist die Spiegelfläche im linken Teil des Behälters 1, ähnlich wie die Spiegelfläche des gereinigten Wassers im rechten Teil des Behälters 1 in dem Niveau der Überlaufrinne 5. Der Doppelschwimmer 16 liegt in seiner Unterlage oberhalb der Überlaufrinne 5. Der Quersteg 13 des Hebels 14 ist am unteren Ende der Öffnung 12 der Aufhängeöse 11 gelagert und erhöht den Dichtungsdruck zwischen dem Dichtungssitz 8 und dem Dichtungsflansch 9 des Verschlußkörpers 10, der in den Dichtungssitz 8 durch sein Eigengewicht und durch den Wasserdruck eingedrückt wird. Der Wasserdruck ergibt sich durch die Querschnittsdifferenz zwischen dem Durchflußquerschnitt des Dichtungssitzes 8 und dem Querschnitt des Zylinderteils des Verschlußkörpers 10. Das Gewicht 19 befindet sich in seiner linken Grenzstellung am Bolzen 15.

Im Normalbetrieb fließt das Schmutzwasser durch die Zuleitung 3 in den rechten Teil des Behälters 1, strömt durch die schwimmende körnige Filterschicht 6 unter der durchlässigen Zwischenwand 4 und als Klarwasser in der Überlaufrinne 5 zu dem nicht dargestellten Rezipienten oder zur weiteren Verarbeitung. Mit Rücksicht auf den Strömungswiderstand der körnigen Filterschicht 6 liegt die Spiegelfläche im linken Teil des Behälters 1 über dem Niveau der Überlaufrinne 5. Im Betrieb erhöht sich durch Verschmutzung der Filterschicht 6 ihr Hydraulikwiderstand, wodurch der Wasserstand im linken Teil des Behälters 1 steigt. Der Pegel im linken Teil des Behälters 1 erreicht zuerst den unteren Rand des Doppelschwimmers 16 und bei weiterem Anstieg verringert sich durch den wachsenden Auftrieb des Doppelschwimmers 16 das auf den linken Arm des Hebels 14 wirkende Lastkippmoment. Bei einer bestimmten Pegelhöhe beginnt sich der Doppelschwimmer 16 zu heben und den linken Arm des Hebels 14 zu drehen. Damit wird der Gewichtsdruck des Hebels 14 auf den Verschlußkörper 10 aufgehoben.

Sobald der Wasserpegel im linken Teil des Behälters 1 einen vorbestimmten Maximalwert erreicht, läuft die Rolle 18 auf dem zum Bolzen 15 näheren geraden Abschnitt des rechten Armes des Hebels 14 bis in die Biegung zwischen den beiden geraden Abschnitten. Dadurch steigt das auf den rechten Arm wirkende Lastkippmoment und bei gleichzeitiger Teilauftauchung des Doppelschwimmers 16 sinkt der rechte Arm des Hebels 14. Nach Anschlagen des Querstegs 13 am oberen Ende der Öffnung 12 der Aufhängeöse 11 hebt durch das weitere Herabsinken des rechten Armes des Hebels 14 der linke Hebelarm die Dichtungsmanschette 9 des Verschlußkörpers 10 vom Dichtungssitz 8. Das ausfließende Wasser erzeugt einen auf den Verschlußkörper 10 wirkenden Auftrieb und der linke Hebelarm hebt sich in seine oberste Stellung an, die z.B. durch einen nicht dargestellten Anschlag begrenzt ist. In dieser Stellung hat der äußere gerade Abschnitt des rechten Hebelarmes eine größere Neigung als der Reibungswinkel der Rolle 18, sodaß die Rolle 18 bis zum Anschlag 17 rollt und das Gewicht 19 bis zum Anschlag 17 verschiebt. Dadurch wird das Lastkippmoment auf dem rechten Arm des Hebels 14 weiter vergrößert.

Durch Freigabe der Austrittsöffnung 7 fließt das Wasser aus dem linken Teil des Behälters 1, wodurch der Pegel in diesem Behälterteil schnell sinkt. Mit einer gewissen Verzögerung durch den Einfluß der Strömungswiderstände und der Wasserträgheit sinkt auch der Pegel des gereinigten Wassers im rechten Behälterteil. Das gereinigte Wasser fließt jetzt als Waschwasser im Rückfluß durch die ggf. zusammengebackene Filterschicht 6, die dadurch zerstört und wieder in einzelne Körner getrennt wird. Durch Reibung werden die angelagerten Verunreinigungen freigesetzt und anschließend vom Waschwasser durch die Austrittsöffnung 7 z. B. in einen nicht dargestellten Absetzbehälter transportiert, falls die beschriebene Filtereinrichtung nur einen Teil einer komplexen Wasseraufbereitungsanlage bildet. Durch das Absinken des Wasserstands im linken Teil des Behälters 1 vermindert sich der auf den Verschlußkörper 10 und auf den Doppelschwimmer 16 wirkende Auftrieb, was einen allmählichen Anstieg des auf den linken Hebelarm 14 wirkenden Lastkippmoments bewirkt. In einem bestimmten Zustand werden die Kippmomente auf den beiden Armen des Hebels 14 gleich und der Verschlußkörper 10 beginnt dem sinkenden Pegel im linken Behälterteil mit seinem eingetauchten unteren Ende zu folgen.

Sobald der Wasserstand im linken Behälterteil ein voreingestelltes Minimalniveau erreicht hat, greift der Verschlußkörper 10 mit seiner Dichtungsmanschette 9 wieder in den Dichtungssitz 8 der Austrittsöffnung 7 ein. Die Auftriebskraft auf den Verschlußkörper 10 nimmt plötzlich ab, weil der Druck der Wassersäule auf seine untere Stirnfläche aufhört. Die Dichtungsmanschette 9 wird dabei im wesentlichen durch das Gewicht des eingetauchten Teils des Verschlußkörpers 10 in den Dichtungssitz 8 gedrückt, während der aufgetauchte Teil des Verschlußkörpers durch das Lastkippmoment am rechten Hebelarm ausgeglichen ist. In dieser Stellung des Hebels 14 hat aber der Außenabschnitt des rechten Hebelarmes eine größere Neigung als der Reibungswinkel der Rolle 18, so daß diese bis zur Abbiegung des rechten Armes läuft und das Gewicht 19 mitnimmt.

Da im Verlauf dieser Bewegung des Gewichtes 19 das Lastkippmoment auf dem rechten Hebelarm fortschreitend abnimmt, steigt gleichzeitig der Andruck des Dichtungsflansches 9 auf den Dichtungssitz 8, bis sich das Gewicht 19 unter dem Knick zwischen den geraden Abschnitten des rechten Hebelarmes befindet. Ab diesem Zustand drückt der Verschlußkörper 10 gerade mit seinem Eigengewicht auf den Dichtungssitz 8 und es kommt zum Ausgleich der am Hebel 14 wirksamen Kippmomente. Sobald das Gewicht 19 die Biegung zwischen den geraden Abschnitten des rechten Hebelarmes erreicht, wird durch den Einfluß des Lastkippmomentes des nicht eingetauchten Doppelschwimmers 16, der somit auch keine Auftriebskraft erzeugt, das Lastkippmoment am linken Hebelarm größer als das auf den rechten Hebelarm wirkende Moment und der Hebel 14 schwenkt mit seinem linken Arm in die Unterlage, in welcher der Quersteg 13 auf dem Unterrand der Öffnung 12 der Aufhängeöse 11 aufliegt.

In dieser Stellung des Hebels 14 ist der gerade Innenabschnitt des rechten Hebelarmes in Richtung zum Bolzen 15 unter einem größeren Winkel als der Reibungswinkel der Rolle 18 geneigt, so daß die Rolle 18 in die dargestellte Ausgangsstellung zurückläuft und das Gewicht 19 mitnimmt. Damit ist die Einrichtung für einen erneuten Waschvorgang nach der nächsten Verschmutzung der Filterschicht 6 vorbereitet.

Es sind auch andere als die beschriebene Ausführung möglich. Ähnliche Resultate ergeben sich auch mit einem auf der ganzen Länge des Hebels 14 oder nur auf dem linken Arm des Hebels 14 verschiebbaren Gewicht 19, wenn der rechte Hebelarm in dem Falle eines schwimmenden Verschlußkörpers 10 ganz weggelassen oder nur auf einem Teil seines Hebelarmes das Gewicht 19 verschoben wird, wobei ein geeignetes nicht dargestelltes Gegengewicht am rechten Arm des Hebels 14 befestigt ist. Das Gewicht 19 kann durch -nicht dargestelltes -Quecksilber gebildet werden oder die Form einer Kugel haben, welche im Hebel 14 gelagert ist, der z. B. als geschlossenes Rohr ausgebildet ist. Diese alternativen Ausführungen des Gewichtes 19 sind einfacher zu warten und erhöhen die Genauigkeit und die Zuverlässigkeit der Armaturfunktion.

Die Lage des Bolzens 15 und des Doppelschwimmers 16, der Bewegungsbereich des Gewichtes 19 und die Länge der Aufhängeöse 11 können verstellt werden. Die Aufhängeöse 11 kann zum Beispiel durch eine nicht dargestellte Kette oder Litze ersetzt werden. Das Gewicht des Verschlußkörpers 10 und des Gewichtes 19 kann durch eine Zusatzbelastung verändert werden. Durch diese und ähnliche Steuermittel kann die Funktion der Armatur an geänderte Betriebsbedingungen angepaßt werden, wenn z.B. durch eine Beschädigung des Doppelschwimmers 16 sein Rauminhalt verringert ist.

Besonders, wenn der minimale Wasserpegel etwa auf das Niveau der Austrittsöffnung 7 eingestellt werden soll, kann die Armatur mit einem doppelt oder einfach wirkenden Dämpfer 20 ausgerüstet werden, der z.B. zwischen dem linken Arm des Hebels 14 und der versenkten Wand 2 angeordnet wird und das Verschließen der Austrittsöffnung 7 verzögert. Der vorzeitigen Schließung der Austrittsöffnung 7, z.B. als Folge des größeren Wasserabflusses durch den Einfluß der Druckabsenkung in der Austrittsöffnung 7, kann ferner durch ein Gefäß 21 entgegengewirkt werden, das am rechten Hebelarm knapp oberhalb der durchlässigen Zwischenwand 4 aufgehängt ist und in seinem Boden eine oder mehrere Öffnungen 22 aufweist. Solange oberhalb der Zwischenwand 4 noch Wasser vorhanden ist, wird die Bewegung des rechten Hebelarmes nach oben gedämpft. Wenn das Wasser auf das Niveau der Zwischenwand 4 gefallen ist, fließt das Wasser aus dem Gefäß 21 aus und setzt der Bewegung des Hebels 14 keinen hydraulischen Widerstand entgegen. Dieselbe Funktion hat auch ein Kolben 23, der am rechten Hebelarm aufgehängt mit freiem Spiel in einem senkrechten beidseitig offenen Zylinder 24 gelagert ist, welcher in dem rechten Teil des Behälters 1 oberhalb der Zwischenwand 4 zwischen dem Niveau der Überlaufrinne 5 und der Zwischenwand 4 angeordnet ist. Die Dämpfungswirkung hat das Gefäß 21 und der Kolben 23 im offenen Zylinder 24 auch dann, wenn sie an den linken Hebelarm unter Voraussetzung einer gekoppelten Bewegung mit dem Hebel 14 aufgehängt werden.

Der Einfluß von Druckänderungen in der Auslaßöffnung 7, besonders von Drucksenkungen, auf die Festigkeit der Verbindung des Dichtungssitzes 8 und des Verschlußkörpers 10 kann durch einen Belüftungskanal 25 beseitigt werden, der im Verschlußkörper 10 untergebracht ist und in der geschlossenen Stellung des Verschlußkörpers 10 mit seinem unteren Ende in der Austrittsöffnung 7 und mit seinem oberen Ende über dem maximalen Pegelstand im linken Teil des Behälters 1 mündet.

Die Einrichtung funktioniert auch mit einem Verschlußkörper 10, der schwerer oder leicht als Wasser oder eine andere Arbeitsflüssigkeit ist, sowie auch bei einer Auslaßöffnung 7 mit anders als senkrecht orientierten Durchflußachse. Der Teil des Hebels 14, welcher das Gewicht 19 führt, kann mehr als eine Biegung aufweisen, wobei die geraden Abschnitte auch durch kontinuierliche Bögen ersetzt sein können. Bei Verwendung eines ständig schwimmenden Verschlußkörpers 10 kann dieser Abschnitt des Hebels 14 gerade und ohne Biegung sein.

Bei Anwendung der erfindungsgemäßen Armatur zum selbsttätigen Waschen einer nicht - schwimmenden Filterschicht mit Durchfluß des Schmutzwassers von oben nach unten kann die versenkte Wand 2 durch eine senkrechte durchlässige Zwischenwand oberhalb der Filterschicht 6 ersetzt werden, wobei die versenkte Wand 2 für die Bildung eines Voratsbehälters für gereinigtes Wasser mit einem Wasserablauf am Boden des Behälters 1 und mit einer Überlaufrinne für das gereinigte Wasser im Niveau der dargestellten Überlaufrinne 5 dienen kann.

Die erfindungsgemäße Armatur ist überall dort anwendbar, wo ein einstellbares oder umstellbares, schnelles, hydrostatisch gesteuertes Dosieren oder Entleeren eines bestimmten Flüssigkeitsvolumens verlangt wird.

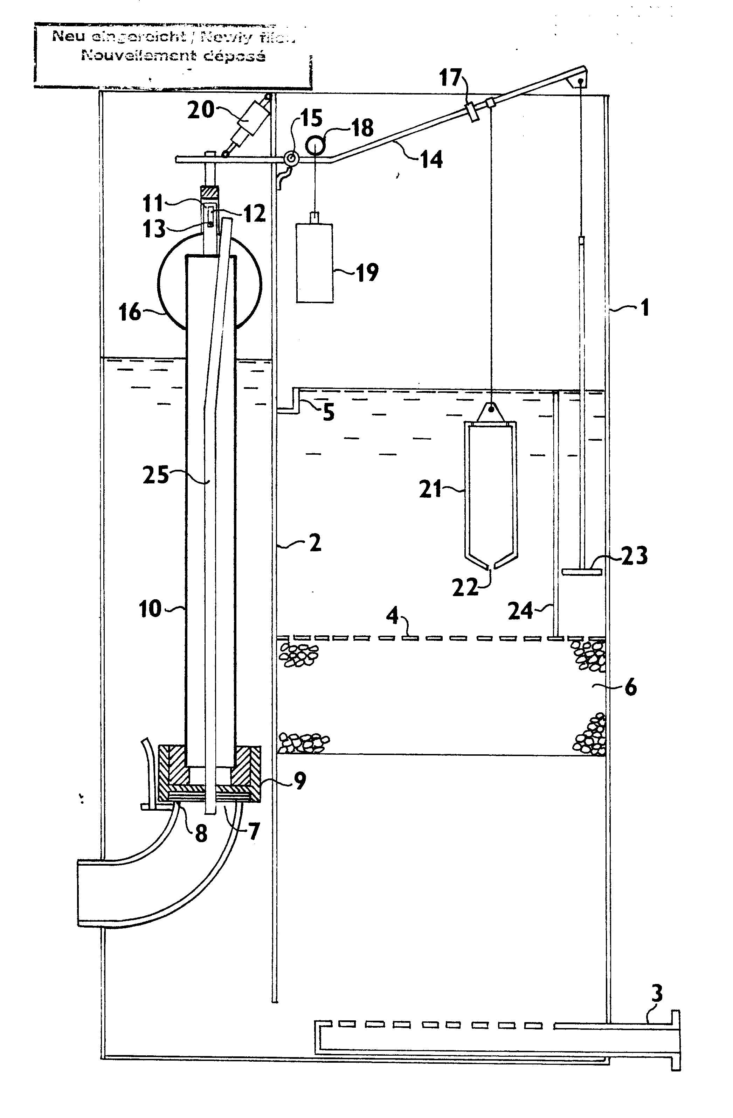

## Ansprüche

1. Schwimmerarmatur zum Dosieren bestimmter Flüssigkeitsmengen, insbesondere zum selbsttätigen Steuern des Waschvorganges einer Filterschicht, bestehend aus einem die Flüssigkeit und die darin eingetauchte Filterschicht enthaltenden Behälter mit einer Auslaßöffnung aus einem Verschlußkörper für die Auslaßöffnung, welcher an einem mit einem Schwimmer versehenen Schwenkhebel aufgehängt ist, **dadurch gekennzeichnet,** daß ein Gewicht (19) auf mindestens einem Teil der Länge des Hebels (14) frei verschiebbar gehaltert ist.

2. Schwimmerarmatur nach Anspruch 1, **dadurch gekennzeichnet,** daß das Gewicht (19) an einer auf dem Hebel (14) laufenden Rolle (18) aufgehängt ist.

3. Schwimmerarmatur nach Anspruch 1, **dadurch gekennzeichnet,** daß das Gewicht (19) durch Quecksilber gebildet ist, das im Inneren des hohlen endseitig dicht verschlossenen Hebelarms eingeschlossen ist.

4. Schwimmerarmatur nach Anspruch 1, **dadurch gekennzeichnet,** daß das Gewicht (19) aus einer Kugel besteht, die auf dem Hebel (14) oder in seinem Inneren rollt.

5. Schwimmerarmatur nach einem der Ansprüche 1 bis 4, **dadurch gekennzeichnet,** daß der Hebel (14) auf einem Teil seiner Länge nach oben abgebogen ist.

6. Schwimmerarmatur nach Anspruch 5, **dadurch gekennzeichnet,** daß der abgebogene Hebel (14) aus geraden Abschnitten besteht.

7. Schwimmerarmatur nach einem der Ansprüche 1 bis 6, **dadurch gekennzeichnet,** daß der Hebel (14) mit einem Dämpfer (20) gekuppelt ist.

8. Schwimmerarmatur nach einem der Ansprüche 1 bis 7, **dadurch gekennzeichnet,** daß der Hebel (14) mit einem Gefäß (21) mit mindestens einer Öffnung (22) im Unterteil gekuppelt ist.

9. Schwimmerarmatur nach einem der Ansprüche 1 bis 8, **dadurch gekennzeichnet,** daß der Hebel (14) mit einem Kolben (23) gekuppelt ist, der in einem unter dem Hebel (14) angeordneten, beidseitig offenen Zylinder (24) frei verschiebbar ist.

10. Schwimmerarmatur nach einem der Ansprüche 1 bis 9, **dadurch gekennzeichnet,** daß der hohlzylindrische Verschlußkörper (10) an seinem unteren Ende durch eine Dichtungsmanschette (9) geschlossen ist und mit einem in die Auslaßöffnung mündenden Belüftungskanal (25) versehen ist.

11. Schwimmerarmatur nach einem der Ansprüche 1 bis 10, dadurch **gekennzeichnet,** daß der Hebel (14) ein an einer vertikalen Zwischenwand (2) des Behälters (1) schwenkbar gelagerter Doppelhebel ist, an dessen einem Arm der in den einen Behälterteil eintauchende Verschlußkörper (10) mit totem Gang (12, 13) und an dessen anderem Arm das Gewicht (19) aufgehängt sind.